# EUROPEAN PATENT APPLICATION

(11) **EP 1 672 532 A1**
(43) Date of publication of application: **21.06.2006**
(21) Application number: 04257824.5
(22) Date of filing: 16.12.2004
(51) Int. Cl.: G06F 17/30

(54) **Layered Information Management System**

(71) Applicant: BP Chemicals Limited, Sunbury-on-Thames, Middlesex TW16 7BP (GB); BP Corporation North America Inc., Warrenville, IL 60555 (US)
(72) Inventor: The designation of the inventor has not yet been filed
(74) Representative: Hawkins, David George

(57) **Abstract**

This invention relates to an information management system for managing information which is present in two or more databases, which system comprises a computer program comprising instructions which provide a tiered architecture for linking to relevant information present in the two or more databases,
said tiered architecture comprising a set of first tiers, said first tiers each defining an information grouping criteria and an accessibility level associated with information within the information grouping criteria,
said tiered architecture further providing one or more sub-tiers associated with a first tier, said sub-tiers providing a comment relevant to information within the information grouping criteria and/or a link to information within the information grouping criteria which is present at one or more of the two or more databases, each sub-tier having a defined accessibility level and being accessible to allow addition of a comment and/or of a link to information into said sub-tier, or viewing or searching of information within said sub-tier only by users meeting the defined accessibility level,
said tiered architecture further providing a format for addition of a comment and/or of a link to information in the tiers or in one or more sub-tiers that requires pre-defined attributes of the information before the comment or link can be added.

## Description

This invention relates to an information management system, and, in particular, to an information management system for managing information which is present in two or more databases.

Many companies, especially those which have site presences ("sites"), such as office sites, retail sites and/or research sites, at two or more locations, store information pertinent to the company on more than one database. For example, each site may have a database associated therewith, or, especially for larger companies, such as those with a multi-national presence, even where a database is shared between two or more sites, other databases may be associated with other sites at significantly different geographical locations.

Information in these databases is often only accessible from the associated sites (and probably only by particular users at the sites). More problematically, it is rare that the different sites will store information in the same way, such as using a defined database structure or file nomenclature, these aspects of the database often being determined by particular individuals at the sites. Thus, it is often difficult or impossible for other users, such as from different sites (i.e. sites not "associated" with the database) to access the information or even find out what information is present on a particular database. Individuals may also store significant quantities of information on personal computer drives where it is not accessible to any other users. Sometimes, some separation of information is necessitated, for example, for reasons of confidentiality and/or national law. However, as the information present in the databases is often of significant business value, sharing of the information between different company sites in a structured and defined way can provide increased business value.

The present invention overcomes such issues by providing an information management system which has a defined architecture for linking information in two or more databases, which, whilst maintaining necessary confidentiality of information, allows entry, searching and viewing of information by any users with the required clearance.

Thus, in a first aspect, the present invention provides an information management system for managing information which is present in two or more databases, which system comprises a computer program comprising instructions which provide a tiered architecture for linking to relevant information present in the two or more databases,
said tiered architecture comprising a set of first tiers, said first tiers each defining an information grouping criteria and an accessibility level associated with information within the information grouping criteria,
said tiered architecture further providing one or more sub-tiers associated with a first tier, said sub-tiers providing a comment relevant to information within the information grouping criteria and/or a link to information within the information grouping criteria which is present at one or more of the two or more databases, each sub-tier having a defined accessibility level and being accessible to allow addition of a comment and/or of a link to information into said sub-tier, or viewing or searching of information within said sub-tier only by users meeting the defined accessibility level,
said tiered architecture further providing a format for addition of a comment and/or of a link to information in the tiers or in one or more sub-tiers that requires pre-defined attributes of the information before the comment or link can be added.

The two or more databases are usually provided at locations remote to one another, for example, at different company sites. The present invention maintains any necessary confidentiality of information by defining an accessibility level for each tier or sub-tier, but otherwise makes information in the respective databases accessible (to allow addition of a comment and/or of a link to information into a sub-tier, or viewing or searching of information within a sub-tier) to all users meeting the defined accessibility level. The present invention also requires pre-defined attributes of the information before a comment or link to information can be added to the database, ensuring all information in the information management system is defined by a common set of attributes. This facilitates viewing, searching and retrieving of the information.

The information (in the two or more databases) may be any suitable business or company information, and may include, for example, reports that apply to an individual site, such as site monthly reports or minutes of site meetings, and/or reports that apply to more than one site, such as regional accounts, regional sales reports or project reports for projects located across more than one site.

The present invention links related information in the databases within a tiered architecture, said tiered architecture comprising a set of first tiers, each of said first tiers being associated with one or more sub-tiers.

Generally each of the first tiers will define a high level business or project goal, and the one or more sub-tiers include information, such as details of individual projects or programmes, relevant to the high-level business or project goal. For example, the first tier may define a technical target for a research project, and the one or more sub-tiers may include information on an experimental programmes or programmes designed to meet the technical target.

Preferably, new first tiers are only added by, or at least under instruction from those, typically management, responsible for delivering the high level business or project goal. Preferably, the definition includes suitable objectives and/or other definition which will enable other users who are able to access the information in the first tier and/or sub-tiers to quickly understand what the high level business or project goal context is (or was). This information can be particularly useful when personnel access a record (tier) whom have not previously been involved, especially if other personnel are no longer with the company to explain the context in person.

Each of the first tiers defines an information grouping criteria. For example, as described above, the information grouping criteria may be a technical target-type definition for a research project. The research project may have input (for example, experimental programmes may be performed) from a single site or multiple sites.

Each first tier and each sub-tier also defines an accessibility level for the particular first tier or sub-tier. The accessibility level defines access to the tier/sub-tier, and hence to the information therein. Non-limiting examples of possible types of accessibility levels include:
"Non-confidential", for example, for information that is available for use outside of the company,
"Commercially sensitive", for example, for commercial information which may or may not be confidential per se, but which may have significant business value and should not be disclosed to third parties,
"Customer sensitive", for example, for information on third parties which may or may not be confidential per se, but which may have significant business value and should not
be disclosed to third parties,
"Company confidential", for example, for information which can be used freely within the company but which should not be disclosed to third parties,
"Management confidential", for example, for information which should not be disclosed except to personnel of particular seniority in the Company,
"Site confidential", for example, for information that which should not be disclosed outside of a particular site, and
"Third-party confidential", for example, for information which, for example, should not be disclosed except to those involved in a third-party relationship, for example, where parties are working in a joint venture.

A number of other accessibility levels may also be envisioned, including combinations of the above.

All company employees with access to the information management system of the present invention will have a particular accessibility level (clearance) which will define their ability to access the information within a first tier and its associated sub-tiers. Sub-tiers may have the same accessibility level as the associated first tier, or may have a different accessibility level, for example may have a higher accessibility level such that the information in certain sub-tiers may be more restricted than that in the associated first tier, or vice versa. For example, within a first tier defining information which is "site confidential" there may be one or more sub-tiers with the same accessibility level, and one or more sub-tiers with a "Site management confidential" accessibility level.

The sub-tiers may also have associated sub-tiers, and hence may define their own information grouping criteria, being subsets of the information grouping criteria used for the associated first tier. Thus, a first tier may define an information grouping criteria for one or more second tiers, and one or more of the second tiers may themselves define a subset of the information grouping criteria of the first tier for one or more associated third tiers, and so on.

In a similar manner to it being preferred that new first tiers defining a high level business or project goal are only added by, or at least under instruction from those responsible for delivering the high level business or project goal, generally, it is preferred that new sub-tiers are added by personnel, or under instruction from personnel, with suitable responsibility for the content of the sub-tiers. Employees with appropriate clearance at any site which has access to the information management system of the present invention may add information into appropriate existing sub-tiers, may add new sub-tiers, may search for relevant information and may view relevant information in the associated databases within their accessibility level.

When adding information, the information management system of the present invention allows addition of a comment relevant to information within the information grouping criteria and/or linking to information within the information grouping criteria which is present at one or more of the two or more databases. This addition of information may be as part of an existing sub-tier or as a new sub-tier. The comment may be, for example, a summary of one or more pieces of information within the information grouping criteria and, optionally, may identify the existence of further information not directly accessible from the management information system, along with contact details for gaining access to this information. For a research programme which is a sub-tier of a technical target for a research project, for example, a particular sub-tier may include a written summary of the results and conclusions of the research programme' and/or may include one or more links to files containing relevant information, such as programme reports, present in one or more databases. The sub-tier may not link directly to all the experimental results obtained, but may instead provide contact details and/or experimental reference details should such information be of use.

Where particular information is included in (added to) the information management system of the present invention (i.e. by a comment or by linking to information as described) the present invention requires pre-defined attributes of the information before the addition can be made. Thus, all information in the information management system is defined by a common set of attributes.

The attributes are used to define important details of a particular piece of information. The mandatory pre-defined attributes according to the present invention include the accessibility level of the information and a relationship to an information grouping criteria (for example, to a technical target). These can be based on the tier or sub-tier to which the information is added or linked. Preferred other attributes for a particular piece of information include title, author(s), date, location (e.g. site, country) and language. Numerous other attributes can be envisioned depending on a particular company structure. For example, where companies are split into numerous affiliates, the affiliate may be an attribute. Similarly, companies may be split by business streams, business units and/or by assets (e.g. production plants), and such attributes may be relevant.

Attributes may also be information specific. Thus, for experimental information, and in addition to any more general project attributes, such as a project definition, the attributes may include specifics of one or more of experimentalist, catalyst, run (experiment) number and date, sample identifier and actual piece of laboratory equipment (e.g. an individual reactor).

The information management system of the present invention is itself a database, which includes all tiered architecture and the attributes within the tiers and sub-tiers. As well as adding a link to information that is present on the two or more databases to which the information management system is "linked" (aligned), it is also possible to add a link to information in files present on a personal drive or on a database to which the information management system is not directly linked. In this case the user provides a copy of the file, which is copied to the information management system database.

In a preferred embodiment, the information management system may additionally comprise one or more databases of attributes for users of the information management system. These "user databases" include all the attributes of the particular users, including name, locations etc. The user databases may include contact details for the users, such as e-mail addresses. The user databases may also define the users' accessibility levels. Using these databases all or at least the majority of the attributes for entry of information in the information management system may then be automatically generated by the information management system itself. Thus, when a user wishes to enter information (either as a comment or as a link), the user need only define (e.g. select) the relevant first tier or sub-tier for the information and the information management system will automatically generate the attributes corresponding to the relationship to a particular tier (e.g. a reference number), and use a database of details of the users/authors to generate name and location information etc. The information management system may request entry or confirmation of the accessibility level or may generate a default accessibility level, for example based on associated (e.g. higher) tiers or on the accessibility level of the user entering the information, and request confirmation of the accessibility level. This minimises the details which a user has to enter, making the attributes addition easy and quick to use, whilst ensuring a robust attributes list for all information entered (i.e. users cannot "skip" inclusion of the information).

The information management system of the present invention provides for searching of the attributes, the use of a pre-defined attributes facilitating searching of the information when the original information is not easily searchable. Thus, the information management system may be searched by any of the attributes (or combinations thereof), such as by technical target, author, date, business stream, asset, and so on. In a preferred embodiment, the information management system provides a lexicon of terms by which the information can be defined and which can also be searched. The terms will generally be relevant to the type of information present. For example, for accounts, a lexicon of accounting terms may be provided. As a further example, for research work, a lexicon of chemical and/or engineering terms may be provided. Said terms provide basis for allowing more accurate searching of the information management system for particular information.

In a most preferred embodiment, the information management system of the present invention may also provide for generating and monitoring of actions relevant to the information which has been entered. For example, for entry of a report, the information management system may provide an option for generating an action for review of the report by a defined user or users. Thus, the person entering the report can define the required reviewer(s) and, optionally, a date by which he wishes the report to have been reviewed. Once the report has been reviewed, the reviewer(s) can also record this. Comments on the report, for example, may be provided in a suitable sub-tier.

As an alternative example, the information which is linked to a particular sub-tier may be experimental information from which is obtained one or more samples that require analysis. The particular sub-tier may generate an action to perform the analysis and, optionally, may also set a date for return of the required analysis. The analysis information may subsequently be added as summary thereof or as a link to an actual datafile linked to the original experimental information, and the person who performs the analysis may record that the analysis has been performed in the particular sub-tier.

The use of actions with completion dates allows the information management system to be used as a performance management tool, for example, to review turnaround times of analytical data, output from experimental programmes and the like.

The information management system of the present invention may also provide for generating e-mails relevant to the information which has been entered. For example, with the inclusion of user contact attributes the information management system can provide the option for generation of e-mails to the relevant author.

The present invention also provides a computer program on a computer-readable medium, which comprises instructions which provide a tiered architecture for linking to relevant information present in the two or more databases, said tiered architecture comprising a set of first tiers, said first tiers each defining an information grouping criteria and an accessibility level associated with information within the information grouping criteria,
said tiered architecture further providing one or more sub-tiers associated with a first tier, said sub-tiers providing a comment relevant to information within the information grouping criteria and/or a link to information within the information grouping criteria which is present at one or more of the two or more databases, each sub-tier having a defined accessibility and being accessible to allow addition of a comment and/or of a link to information into said sub-tier, or viewing or searching of information within said sub-tier only by users meeting the defined accessibility level,
said tiered architecture further providing a format for addition of a comment and/or of a link to information in the tiers or in one or more sub-tiers that requires pre-defined attributes of the information before the comment or link can be added.

By way of example, the information management system of the present invention will be illustrated with respect to the Figures and the following example, where:
Figure 1 represents a general structure for an individual first tier and some associated sub-tiers linking information within a company, and
Figure 2 represents a general structure for an individual first tier and some associated sub-tiers for the example of information within a company engaged in research at multiple locations.

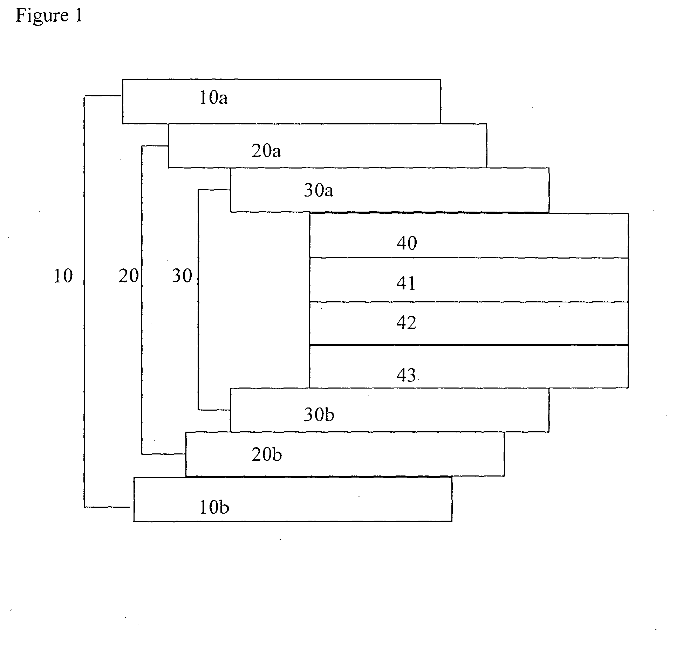

Figure 1 shows a first tier (10), a second tier (20) which is a sub-tier of the first tier, a third tier (30) which is a sub-tier of the second tier, and a set of fourth tiers (40, 41, 42, 43) which are sub-tiers of the third tier.

The first, second and third tiers provide not only a definition of the respective tiers as already described (10a, 20a, 30a respectively), but also the opportunity to add further comments in respect of the information in the associated sub-tiers (10b, 20b, 30b respectively).

For example, the first tier defines an information grouping criteria and an accessibility level associated with information within the information grouping criteria for a suitable high level business or project goal (10a), as described previously, such as a technical target for a research team, and also provides for a final link or comment to be added (10b), such as an overall summary or conclusions, once the information in the second, third and fourth tiers is complete.

Similarly, the second tier defines its own information grouping criteria and accessibility level (20a), as described previously, and provides for a link, statement or comment to be added (20b) relevant to the second tier, once the information in the third and fourth tiers is complete, and the third tier defines its own information grouping criteria and accessibility level (30a), as described previously, and provides for a link or comment to be added (30b) relevant to the third tier, once the information in the fourth tiers is complete.

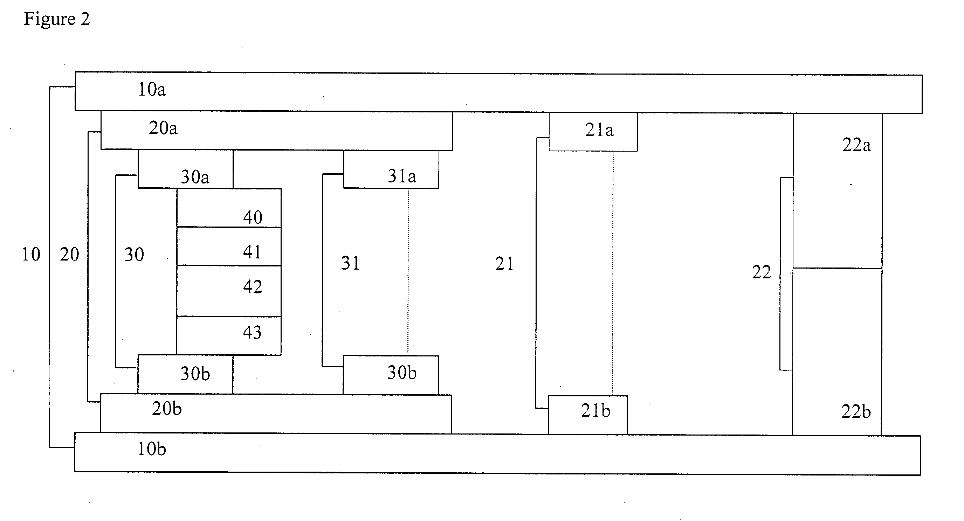

More particularly Figure 1, and the present invention generally, will be exemplified with reference to information within a company engaged in research at multiple locations, as represented in Figure 2.

As for Figure 1, Figure 2 shows a first tier (10), a second tier (20) which is a sub-tier of the first tier, a third tier (30) which is a sub-tier of the second tier, and a set of fourth tiers (40, 41, 42, 43) which are sub-tiers of the third tier. In this particular example, the first tier (10) defines a technical target for a research project and the second tier (20) defines an experimental programme to allow the technical target to be achieved (for example by linking to one or more reports or spreadsheets which define the experimental programme). The third tier (30) defines an experimental record, which would typically include a method for a particular experiment or batch of experiments (for example by a link to a file containing the experimental method or by writing the method directly into the information management system of the present invention) and results of the experiments. The fourth tiers (40, 41, 42, 43) define a series of "specialisms" necessary to support the experiment or experiments of the third tier, such as results from one or more analytical techniques or from modelling work.

Also shown in Figure 2 is a further second tier (21) defining a further experimental programme, which will have one or more sub-tiers (not shown) defining further experimental methods etc. similar to that described for sub-tier (20), and a further second tier (22) defining one or more literature searches (22a) and providing for a summary (review) thereof (22b). As an example of the potential issues with accessibility level, the second tiers may all have the same accessibility level or one or more of the second tiers may define a higher or lower accessibility level as appropriate. For example, where particular experimental programmes are performed in collaboration with a third-party the relevant information may need to be limited to those involved in the particular programme and the accessibility level of this sub-tier set accordingly.

It will be apparent that a number of other second tiers may be present, for example defining further experimental programmes or other relevant information for the overall technical target for the research project.

Also shown in Figure 2 is a further third tier (31) within tier (20) defining a further experimental method, and which may also have one or more further sub-tiers (not shown) defining relevant "specialisms", similar to that described for sub-tier (30) above. It will be apparent that a number of other third tiers may be present, for example defining further experimental methods.

Within this framework, 30b may provide a link to the "direct" results of the experimental method of the third tier (30) and/or may provide for a summary or conclusions based on the experimental results (including "specialisms") to be drawn. Again this may be by a link to a file containing the conclusions (and which may also contain the results) or by writing the conclusions directly into the information management system of the present invention.

By analogy, 20b may allow the addition of a summary or conclusions based on the results of the experimental programme as a whole to be drawn (i.e. made up of a number of separate experimental records from a series of third tiers 30, 31 etc)), and 10b may provide for an overall (final) outcome to be added based on the conclusions from the second tiers shown and any other second tiers that may be present (20, 21, 22 etc).

The multiple locations may be the result of a number of different company set-ups. In one example, different experimental programmes or even different experiments (leading to different experimental records) within an experimental programme may be performed at different research locations (lab-based versus pilot plant-based experiments for example) and stored on different databases. Alternatively or additionally, literature searches or other activities may be performed at different locations to the experimental programmes/experiments and the results stored on a different database. Equally, "specialisms" may derive from different locations, for example, if samples need to be sent off-site for analysis, or if modelling is performed at a different location to experiments themselves, and the results stored on a different database. The present invention allows the information in the different databases to be managed.

Thus, the information management system can be used to link overall project information, project reports, literature and patents information and experimental information from the different locations under a single information grouping criteria (first tier), such as a high level business target, so that the information can be accessed by all relevant members of the company.

## Claims

1. An information management system for managing information which is present in two or more databases, which system comprises a computer program comprising instructions which provide a tiered architecture for linking to relevant information present in the two or more databases,
said tiered architecture comprising a set of first tiers, said first tiers each defining an information grouping criteria and an accessibility level associated with information within the information grouping criteria,
said tiered architecture further providing one or more sub-tiers associated with a first tier, said sub-tiers providing a comment relevant to information within the information grouping criteria and/or a link to information within the information grouping criteria which is present at one or more of the two or more databases, each sub-tier having a defined accessibility level and being accessible to allow addition of a comment and/or of a link to information into said sub-tier, or viewing or searching of information within said sub-tier only by users meeting the defined accessibility level,
said tiered architecture further providing a format for addition of a comment and/or of a link to information in the tiers or in one or more sub-tiers that requires pre-defined attributes of the information before the comment or link can be added.

2. An information management system as claimed in claim 1 wherein each of the first tiers define a high level business or project goal, and the definition includes suitable objectives and/or other definition which will enable other users who are able to access the information in the first tier and/or sub-tiers to quickly understand what the high level business or project goal context is or was.

3. An information management system as claimed in claim 2 wherein new first tiers are only added by, or at least under instruction from those responsible for delivering the high level business or project goal.

4. An information management system as claimed in any one of the preceding claims wherein one or more of the sub-tiers present have associated sub-tiers, define their own information grouping criteria, being subsets of the information grouping criteria used for the associated first tier.

5. An information management system as claimed in claim 4 comprising a first tier defining an information grouping criteria and accessibility level for one or more second tiers, wherein one or more of the second tiers themselves define a subset of the information grouping criteria of the first tier for one or more associated third tiers.

6. A computer program on a computer-readable medium, which comprises instructions which provide a tiered architecture for linking to relevant information present in two or more databases as claimed in any one of claims 1 to 5.
